# EUROPEAN PATENT APPLICATION

(11) **EP 3 859 928 A1**
(43) Date of publication of application: **04.08.2021**
(21) Application number: 19864343.9
(22) Date of filing: 18.09.2019
(51) Int. Cl.: H02J 3/06, H02J 3/46

(54) **METHOD FOR AGGREGATED CONTROL OF A GEOGRAPHICALLY DISTRIBUTED ELECTRICAL LOAD**

(30) Priority: 27.09.2018 RU 2018134128
(71) Applicant: Joint Stock Company «FESCOM», Moscow, 121205 (RU)
(72) Inventor: TRAVNIKOV, Ruslan Anatolievich, Moscow, 117186 (RU)
(74) Representative: Berggren Oy
(86) International application number: PCT/RU2019/050157
(87) International publication number: WO 2020/067934

(57) **Abstract**

The proposed method for the aggregated control of a spatially distributed electrical load, performed on the basis of a hardware-software complex (HSC) and ensuring the maintenance of the balance of generated and consumed active power; planning the loading of generating capacities, taking into account the reserve for unloading consumers; secondary and primary frequency control; management of electrical energy (power) cost for consumers, reducing the purchase volume of electrical energy (power) during the hours of its maximum cost. 4 claims, 7 Figures.

## Description

### Field of the Invention

The claimed invention relates to the field of hardware and software solutions and control algorithms (hardware and software complex - HSC) aimed at solving a problem of aggregated control of a spatially distributed low-power electrical load on a centralized power network.

For the purposes of this application, the following terms have the following meanings:
*Autonomous sources of electricity generation* - solar panels for electricity generation, or wind power turbine generators for electricity generation, or low-power thermal power plants.
*Aggregated control of a spatially distributed electrical load* is the mode control (direct and/or indirect) of electrical energy (electric power) consumption from a centralized electrical network by equipment of a group of consumers of electrical energy (power) for the purpose of:
   - consolidation and sale of the aggregate of the regulatory capabilities of these electric consumers, as a single object of electricity consumption as a product/service in the wholesale electric energy (electric power) market, retail electric energy (electric power) markets;
   - consolidation and sale of the aggregate of the regulation capabilities of these power consumers, as a single object of power consumption as a product/service in the market of system services;
   - implementation of price-dependent power consumption mechanisms.
*Electric energy accumulators and*/*or electric energy storage devices* are reusable EMF sources, involving cyclic use (through charge-discharge) for accumulation and subsequent release of energy.
*Hardware and software complex (HSC)* - a set of hardware solutions, software solutions, as well as control algorithms aimed at solving a problem of aggregated control of a spatially distributed low-power electrical load on a centralized power network.
Electric power *sources:* infinite power electric network, autonomous sources of electric power generation, electric power batteries or electric power storage devices.
*Power system frequency control (frequency control)* is the process of keeping the AC frequency in the power system within acceptable limits.
*Control system* - adaptive control system for DC power supply system elements (hereinafter referred to as the Control System).
*Power supply system* - electrical energy converters, including those powered from infinite power electric network, electric power batteries or electric power storage devices, autonomous sources of electric power generation (hereinafter referred to as the Power Supply System), electrical power switching devices, measuring transducers, data communication channels.
*Price-dependent consumption of electrical energy (electric power) from the centralized electrical network* is a decrease in the volume of purchase (consumption) of electrical energy (power) from the centralized electrical network by the electricity consumer during the hours of the maximum cost of electrical energy (power) in the centralized electrical network, in order to reduce expenses for purchasing electrical energy (power).
*Centralized infinite power electrical network* - an aggregate of production and other property objects of the electric power industry, connected by a single process of production and transmission of electric power in conditions of centralized operational dispatch control in the electric power industry.

### Background

There are known ways to control distributed DC power supplies: CA 2904322 A1, 22.12.2016 (Power control concept in common DC systems).

The method consists in connecting several traditional or alternative generators, loads and/or energy storage elements physically separated from each other in a DC distribution system, and provides a common DC bus for connecting all elements in the distributed DC system using power converters. The first group of one or more elements is used to automatically maintain DC line voltage following a predetermined value to ensure load matching. The average DC link voltage (the set value) maintained by the first group is varied to indicate to all other DC-link elements how they need to change their generation or power consumption.

The prior art discloses power matching devices: CA 2847979 A1, 02.10.2014 (DC-DC Converters). Power is applied between two DC circuits, each circuit being bipolar or connected in the middle, includes: connecting the high voltage bus through a pair of parallel inductors; connection of low voltage bus through a pair of inductors; linking the high voltage bus, the low voltage bus and the inductors with active switches and diodes to provide: (i) a storage configuration wherein energy is transferred from one of the buses and stored in the inductors; and (ii) an exhaust configuration wherein energy is released from the inductors and transmitted to the other elements of the bus.

There is known a study on the use of cellular communication facilities to control a spatially distributed load in order to maintain frequency in a single electrical network within the specified limits:
Usage of telecommunication base station batteries in demand response for frequency containment disturbance reserve: Motivation, background and pilot results (Ilari Alaperä, Pekka Manner, Johan Salmelin, Heli Antila Technology and New Ventures Fortum Power and Heat Oy Espoo, Finland).

A technical solution known from patent document RU 2518178 C2, 06/10/2014 could be taken as the closest analogue of the claimed invention. The known solution is a system and method for controlling an electric power system.

The solution contains a power system central control element that controls the power system based on data generated by components (e.g. sensors) of the power network and the power system. The solution aims to "upgrade" the existing power system so that it can operate more efficiently and reliably, and to maintain value-added services for consumers.

However, the known solution, in particular, does not have abilities of maintaining a balance between the generated and consumed active power (direct current); planning the loading of generating capacities, taking into account the reserve for unloading consumers (direct current); secondary and primary frequency control; managing the cost of electrical energy (electric power) for consumers (direct current), reducing the volume of purchase of electrical energy (power) during the hours of its maximum cost.

Thus, the problem to be solved by the claimed invention is elimination of the above-mentioned disadvantages of the prior art, while the technical result provided by the invention is the implementation of these possibilities when implementing the method of aggregated control of a spatially distributed electrical load, performed on the basis of hardware and software complex (HSC).

### Disclosure of the Invention

The background of the claimed invention is the following.

At the moment, stable operation of the unified energy system of the Russian Federation is achieved due to:
- Control of the operating modes of the Unified Energy System of the Russian Federation, ensuring its reliable functioning and sustainable development;
- Ensuring compliance with the established process parameters for the electric power industry functioning and standard indicators of power quality, subject to economic efficiency of the operational dispatch control process and taking measures to ensure the fulfillment of obligations of the electric power industry entities under contracts concluded in the wholesale electricity market and retail markets;
- Provision of centralized operational and technological management of the Unified Energy System of Russia.

Technically, the problem of maintaining the stability of the unified energy system is reduced to the need to maintain a balance of generated and consumed electricity. An indicator of this balance is the value of the network frequency.

At the moment, maintaining the balance between the generated and consumed active power in the power system occurs through manual or automatic (and more often both at the same time) changing the load of power plant generators.

The claimed HSC-based control method a tool for controlling the electrical load (decrease and increase) on the consumer side, which provides an effect similar to the generation control for maintaining the balance of generated and consumed active electrical power in a unified energy system and isolated power systems.

The claimed invention allows, by manipulating operation of low-power spatially distributed consumers with a DC load and combining these objects in a load array controlled by a single algorithm, with sufficient total power, to solve the following system tasks on a scale of a single power system:
- Maintaining the balance of generated and consumed active power;
- Planning the loading of generating capacities, taking into account the reserve for unloading consumers;
- Secondary and primary frequency control;
- Managing the cost of electricity (power) for the consumer and reducing the volume of purchase of electrical energy (power) during the hours of its maximum cost.

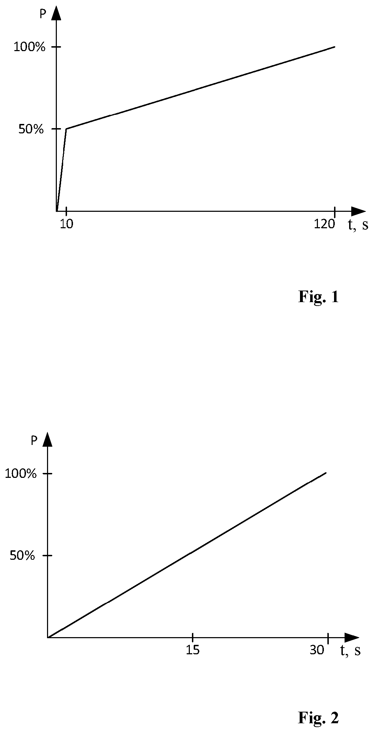

To solve the problems of frequency regulation (maintaining the frequency value within the specified range), HSC must provide the following load control parameters:
With a frequency deviation that makes it necessary to realize the primary power (Fig. 1):
   - Realization of at least half of the required primary power within maximum 10 s;
   - Realization of all required primary power within maximum 2 minutes.
With a jump-like frequency deviation beyond the "dead band" of the primary regulation (Fig. 2):
   - Half of the required primary power within the specified reserve of primary regulation must be realized within maximum 15 s;
   - Completely within maximum 30 s.

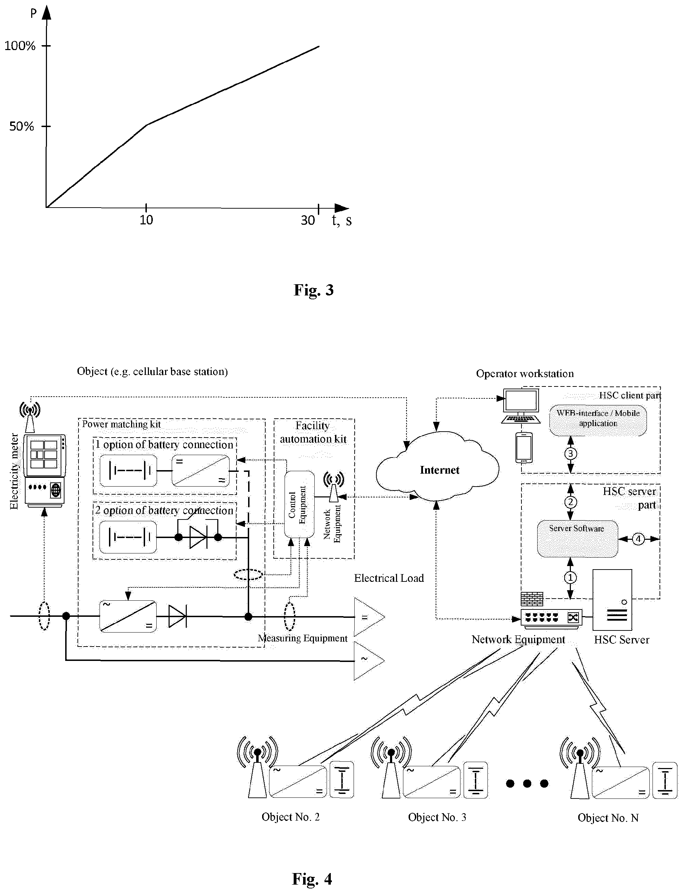

To ensure the achievement of these parameters of frequency regulation, as well as the possibility of solving the problems of planning a reserve of power and managing the cost of electricity (power) for the consumers, HSC must meet the following requirements:
Functional requirements:
   - Reading the electrical parameters of each object in real time - current, voltage, network frequency, battery capacity;
   - Time synchronization for each object, timestamping to read values;
   - Calculation of power value at the level of each object: consumed by the object on AC side, consumed by DC load, consumed and supplied by the battery, other power sources at the object;
   - Maintaining a passport of each object of control, including affiliation, location, rated power, categorization of power supply, etc .;
   - Obtaining the status of each object and group of objects in terms of communication availability, equipment failures;
   - Obtaining current data for each object and total values for a group of objects;
   - Obtaining information from electricity markets;
   - Receiving and processing commands from the system operator (Joint Stock Company "System Operator of the Unified Energy System" (JSC SO UES)) to adjust the load;
   - Accumulation and processing of statistical data;
   - Automatic calculation of the backup battery capacity size, available power for a group of objects;
   - Remote control of operating modes of objects;
Parametric requirements:
   - Simultaneous control of a large number of objects with a total load value sufficient to achieve a systematic effect (at least 100 thousand units);
   - The accuracy of determining the available capacity for loading / unloading is minimum 2%;
   - Total response time to commands of the system operator is maximum 10 s (see Fig. 3);
   - Depth of forecast of available capacity and energy consumption of aggregated storage devices - minimum 1 hour;
   - The reliability of the forecast of the available capacity and energy consumption of aggregated storage units - minimum 90%.

Taking into account the above, it is proposed for examination a method for the aggregated control of a spatially distributed low-power electrical load on a centralized energy network, containing the stages at which a hardware and software complex (HSC) is provided, including three levels: the object part, the server part and the client part, while the number of objects of the object level is not limited and is a single power array for the server part of HSC, while the server part of HSC, calculates aggregated values in such a way that having received a command from the system operator, the server part of HSC calculates the change in power consumption for each object and generates commands for each of the set of objects, which are transmitted simultaneously to all controlled objects using communication channels, while providing information transfer at a speed, allowing the control equipment at the facility, having received a command from the server part of HSC, to regulate power consumption within the time allotted by the system operator, while the methods for regulating power consumption at the facility are determined by the composition and characteristics of the power equipment that makes up the facility's equipment, and are implemented by regulating the operating parameters of this power equipment using one of the physical principles or their combination, where the first physical principle is that power supplies with the function of stabilizing output voltage (CV) are used, at the same time, ensure the operation of the sources in the voltage stabilization mode with maintaining an equal voltage level at the sources and distributing load between the sources in equal volumes at the same voltages U1 = U2 or proportionally when adjusting the voltage at one of the sources in a small interval; the second physical principle is that they ensure operation of one source in the voltage stabilization (CV) mode, and the other (or several others) in the current stabilization (CC) mode, while voltage on the sources should be higher than on the CV, and load distribution is carried out as: a constant value goes to the CC source, and the rest goes to CV, i.e. e. when load changes, the load of the CC source does not change and corresponds to the set value of the current limitation; the third physical principle consists in a combination of the first and second physical principles, depending on the possibility of implementation; the fourth physical principle lies in parallel operation of sources in terms of the amount of output power (kWh) over a period of time.

Additionally, the method is characterized by the fact that when the load is higher than the total load of the sources, the first physical principle is used, and when the load is lower than the total load of the sources, the second physical principle is used.

In addition, the method is characterized by the fact that, in addition to power regulation, the operating parameters of the power supplies, including battery capacity, are constantly monitored, with periodic transmission through the same communication channels through which the control commands come, information to the server part of HSC, where on the basis of these data occurs recalculation of control parameters for each object, from where the information is sent to an operator in the client part of HSC, where the operator is provided with the opportunity to aggregate and differentially evaluate the performance indicators of distributed objects.

Those skilled in the art will appreciate from the foregoing descriptions of the disclosure that a broad understanding of the present invention may be embodied in a wide variety of forms. The described invention can be carried out in a manner different from that described and claimed in this application, without deviating from the essence of the present invention. In this regard, the described scope of the invention should not be limited, since other modifications will become apparent to a person skilled in the art upon examination of the claims of the said invention.

The following is a more detailed description of the invention in order to disclose its essence and to confirm the possibility of implementation on the basis of the materials presented in the application.

### Embodiment of the Invention

At the moment, objects of electrical load (for example, base stations of cellular communication) are not controllable in terms of a controlled decrease and increase in electrical energy (power) consumption from the centralized electrical network.

Also, they are not connected both in terms of the communication environment with a single control center, and in terms of considering them as a single array of electrical load.

To achieve the required characteristics by the invention, it is necessary:
- Make each object controllable, i.e. provide time and value-controlled object load decrease and increase on command from the outside.
- Combine distributed, load-controlled objects into a single consumer array operating in accordance with the parameters of the specified unloading value.
- Implement real time monitoring and calculation of available power to ensure at least two-stage unloading activation, moreover, in a given volume.

Implementation of these capabilities is achieved through the use of the following solutions:
1. Hardware solutions:
   - power controlled equipment that implements at physical level the ability to control the facility load by fully or partially replacing the power consumed by the facility from the centralized electrical network with the power of other power sources (for example, batteries) available at the facility;
   - measuring devices, computer hardware, communication equipment, providing automation / controllability of the object.
2. Software solutions:
   - the object part, which implements collection and processing of data at the facility, issuance of control actions on the power equipment, exchange of data with the central server. As a rule, it is a microprogram or "firmware" for the simplest means of object automation - controllers;
   - the server part that collects data from a variety of automation objects, processes and aggregates information, performs calculations, generates individual operating parameters (settings) and transfers control actions to the object level. It is a specialized server software designed to process large amounts of data.
   - the client part, which provides a user interface for working with data - visualization of the objects' current parameters, data analysis, predictive analytics, reports, etc.
3. Distributed electrical load control algorithms. They are implemented on the basis of the software solution server side.

These solutions constitute a hardware and software complex (HSC).

HSC architecture shown in FIG. 4 is proposed for implementation of the claimed invention.

HSC has a three-level structure:
1. The object part of HSC, including:
   - Power equipment (existing and / or newly installed), in quantity and with capabilities that provide physical object load control (hereinafter referred to as the power matching kit);
   - Measuring, control and network equipment complete with facility-level software (hereinafter referred to as the facility automation kit).
2. The server part of HSC, including server and network equipment, server software. The server part of HSC can have either a specific physical location or be located in the cloud infrastructure.
3. The client part of HSC, including stationary and mobile workstations of HSC users, implemented as an operator interface on a web page or in a mobile application.

The structural diagram of HSC (Fig. 4) shows the relationship between HSC levels and components:
- interaction of the server-side software with objects, - interaction of the server-side software with the client-side software, - interaction of the client-side software with the server-side software, - interaction of the server-side software with external systems (system operator, electricity market, etc.).

The diagram also shows two options for connecting the battery:
Option 1 - connection to a common DC bus through a DC/DC converter with the function of adjusting the output parameters (current, voltage). In this case, the control equipment monitors current and voltage values on DC bus and controls the operation of DC/DC converter to ensure power flow and parallel operation of AC/DC converter and battery to a single load.
Option 2 - connection to the common DC bus after AC/DC converter with the function of regulating the output parameters (current, voltage) through the switching unit, which switches the battery charging and discharging modes. In this case, the control equipment monitors current and voltage values on DC bus, controls the switching unit, and also controls the operation of AC/DC converter to ensure power flow and parallel operation of AC/DC converter and the battery to a single load.

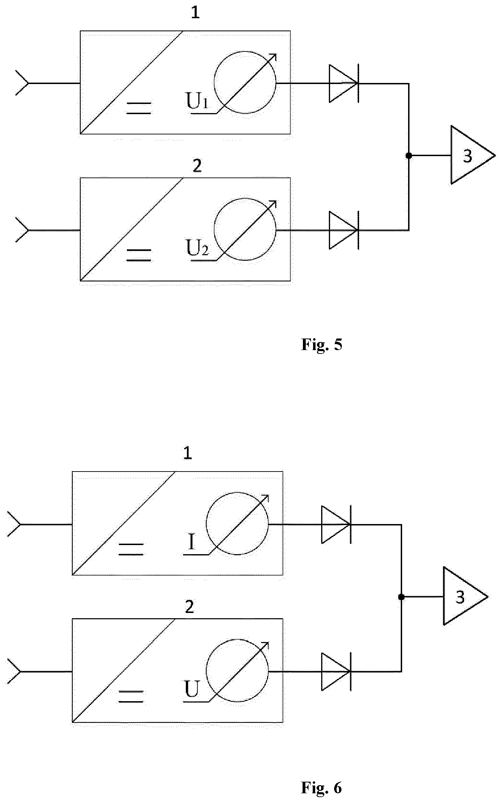

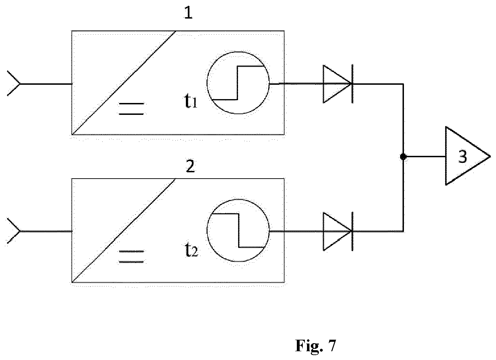

Four physical principles (four principles of power control) are used in operation of a power matching kit, which includes two or more power sources:
1. Operation of the sources in the voltage stabilization (CV) mode with maintaining an equal voltage level at the sources (Fig. 5). Load is distributed between the sources in equal volumes at the same U1 = U2 or proportionally when the voltage is regulated on one of the sources in a small interval.
2. Operation of one source in the voltage stabilization (CV) mode, and the other (or several others) in the current stabilization (CC) mode - see FIG. 6. The voltage across CC sources should be higher than that on CV. Load sharing: the constant value goes to CC source, and the rest goes to CV. Thus, when load changes, CC source load is not changed and corresponds to the current limitation set value.
3. Combination of 1 and 2 ways. For example, at a load higher than the total power of the sources - principle 1, at a load below - principle 2. When implementing the algorithm, presence of information communication between the sources is taken into account (for example, common input of the error amplifier, sense, etc.). Depending on the possibility of realizing one or another connection, the corresponding method of parallel operation is selected.
4. Parallel operation of sources in terms of the amount of output power (kWh) over a period of time, which:
   a. is implemented by the method steps according to the above paragraphs 1-3.
   b. is implemented by alternating operation of sources on a time interval, i.e. turning on power supply from one source while turning off the other source while maintaining the uninterruptible power supply to the load (Fig. 7). Switched on and off sources are determined by the compensation algorithm based on economic feasibility at current time.

The above information is intended to confirm the feasibility of the method steps included in the scope of the proposed claims. However, it also follows from the above that the legal claims of the applicant in this application obviously apply both to the method of aggregated control of a spatially distributed electrical load, and to the system by which this method is implemented, that is, to the hardware and software complex (HSC) itself, which composition is disclosed in the application materials.

Furthermore, the information about particular embodiments of HSC components and the type of connections between them are for illustrative purposes only and do not serve to limit the scope of the claimed invention. In particular, the objects provided in HSC (for example, a cellular base station), obviously for those skilled in the art, can be replaced by any devices and complexes known in the prior art, in relation to which it is necessary to ensure regulation according to the claimed method steps. Also, communications between all means included in HSC can be represented by any options known in the prior art, for example, wired (including fiber) or wireless (including Wi-Fi, cellular, etc. connections), as well as types of communication protocols (Internet, Ethernet, etc.) with minor changes in the hardware and software part of the means.

The applicant believes that the information, shown, in particular, in FIG. 4, further allows to include the features characterizing both the constituent elements of HSC and the connections between them in the claims, since for those skilled in the art they obviously follow from the drawings and other materials contained in the application. Moreover, the detailed disclosure of the above-mentioned features in the description would be clearly unnecessary and would lead to an increase in the scope of the application materials making it difficult to understand the essence of the claimed invention.

Thus, using the method described above, which characteristics are given in the proposed claims, enables maintaining a balance between the generated and consumed active power; planning the loading of generating capacities, taking into account the reserve for unloading consumers; secondary and primary frequency control; management of the cost of electrical energy (power) for consumers, reducing the purchase volume of electrical energy (power) during hours of its maximum cost.

## Claims

1. A method of aggregated control of a spatially distributed low-power electrical load on a centralized power network, containing the stages, which provide a hardware and software complex (HSC), which includes three levels: object part, server part and client part, while the number of objects of the object level is not limited and is a single power array for the server part of HSC, while the server part of HSC calculates aggregated values in such a way that having received a command from the system operator, the server part of HSC calculates the change in power consumption for each object and generates commands for each of the set of objects, which are transmitted simultaneously to all controlled objects using communication channels, at the same time, information is transmitted at a speed that allows the control equipment at the facility, having received a command from the server part of HSC, to regulate power consumption within the time allotted by the system operator, at the same time, the methods for regulating the power consumption at the facility are determined by the composition and characteristics of the power equipment that makes up the equipment of the facility, and are implemented by regulating the operating parameters of this power equipment using one of the physical principles or their combination, where the first physical principle is that power sources are used with output voltage stabilization function (CV), at the same time, ensure operation of the sources in the voltage stabilization mode with maintaining an equal voltage level at the sources and distributing the load between the sources in equal volumes at the same voltages U1 = U2 or proportionally when adjusting the voltage at one of the sources in a small interval; the second physical principle is that they provide operation of one source in the voltage stabilization (CV) mode, and the other (or several others) in the current stabilization (CC) mode, in this case, the voltage at CC sources should be higher than at CV, and the load distribution is carried out as: the constant value goes to CC source, and the rest goes to CV, i.e. when load changes, the load of CC source is not changed and corresponds to the set value of the current limitation; the third physical principle consists in a combination of the first and second physical principles, depending on the possibility of implementation; the fourth physical principle lies in the parallel operation of sources in terms of the amount of output power (kWh) over a period of time.

2. The method according to claim 1, **characterized in that** when the load is higher than the total load of the sources, the first physical principle is used, and when the load is lower than the total load of the sources, the second physical principle is used.

3. A method according to any one of claims 1 or 2, **characterized in that**, in addition to power regulation, they constantly monitor the operating parameters of the power sources, including battery capacity, with periodic transmission through the same communication channels through which the control commands come, information to HSC server part, where, based on these data there is a recalculation of control parameters for each object, from where the information goes to an operator in HSC client part, where the operator is able to aggregate and differentiate the performance indicators of distributed objects.

4. The method according to claim 1, **characterized in that** the fourth physical principle is implemented by a combination of the first, second and third physical principles or by alternating operation of sources over a time interval, i. e. turning on power from one source when turning off another source while maintaining, at the same time, uninterruptible power supply to the load, while the switched on and off sources are determined by the compensation algorithm based on the economic feasibility at current time.
